# FASCICULE DE BREVET EUROPEEN

(11) **EP 3 700 770 B1**
(45) Date de publication et mention de la délivrance du brevet: **01.12.2021**
(21) Numéro de dépôt: 18788779.9
(22) Date de dépôt: 24.10.2018
(51) Int. Cl.: B60K 17/16, B60K 25/06

(54) **PRISE DE FORCE DÉPORTÉE POUR MACHINE HYDRAULIQUE**
VERSETZTER NEBENANTRIEB FÜR HYDRAULISCHE MASCHINE
OFFSET POWER TAKE-OFF FOR HYDRAULIC MACHINE

(30) Priorité: 24.10.2017 FR 1760042
(43) Date de publication de la demande: 02.09.2020
(73) Titulaire: Poclain Hydraulics Industrie, 60410 Verberie (FR)
(72) Inventeur: LUCIENNE, Philippe, 60410 Verberie (FR)
(74) Mandataire: Regimbeau
(86) Numéro de dépôt international: PCT/EP2018/079103
(87) Numéro de publication internationale: WO 2019/081554

(56) Documents cités:
- EP-A1- 2 979 911
- EP-A2- 1 205 330
- FR-A1- 2 562 000
- US-A- 3 769 533
- US-A1- 2002 166 712

## Description

### DOMAINE TECHNIQUE GÉNÉRAL ET ART ANTÉRIEUR

L'invention concerne le couplage d'une machine hydraulique et d'un moteur thermique, notamment au sein de véhicules.

Au sein de véhicules entraînés par un moteur thermique, il est connu d'utiliser une machine hydraulique de puissance, pompe ou moteur, en particulier pour réaliser des transmissions hydrauliques parallèles temporaires. Les pompes ou moteurs sont de plusieurs types, par exemples à pistons radiaux ou axiaux, et dans le cas où ces machines sont réversibles, peuvent servir aussi bien de pompe que de moteur.

Ces machines hydrauliques sont classiquement entraînées directement par l'arbre de sortie du moteur, ou par l'intermédiaire d'un pignon coopérant avec la couronne de distribution du moteur thermique.

Dans certains exemples, il est plus intéressant pour une raison de régime de fonctionnement et d'encombrement de la machine hydraulique de situer l'interface entre la machine hydraulique et les éléments entraînés par le moteur en aval de la chaîne cinématique, par exemple au niveau d'un différentiel entraînant les roues du véhicule.

Il est connu de l'art antérieur, par exemple dans le document FR 2 996 176 de disposer la machine hydraulique coaxialement à l'un des arbres d'entraînement transmettant le mouvement de rotation du différentiel aux roues. Ce document divulgue un système conforme au préambule de la revendication 1.

L'arbre d'entrée de la machine hydraulique est donc cylindrique et creux, l'arbre d'entraînement s'étendant concentriquement à l'intérieur dudit arbre d'entrée de la machine hydraulique.

L'arbre d'entrée de la machine hydraulique comporte à l'une de ses extrémités un profil coopérant avec une couronne solidaire du différentiel.

Ce mécanisme présente l'inconvénient d'être encombrant, notamment dû au diamètre important d'une machine hydraulique, et pose des difficultés d'intégration notamment à cause de la proximité du bloc moteur thermique. La machine hydraulique coaxiale est donc limitée en diamètre à la distance qui existe entre l'axe de l'arbre d'entraînement et la paroi du moteur thermique. Le choix de la machine hydraulique est donc très limité en diamètre. Par exemple, cela peut être limitant dans le choix de la nature d'une pompe, sachant qu'une pompe à pistons axiaux est de plus petit diamètre qu'une pompe à pistons radiaux, ou qu'une pompe à axe brisé.

Dans un souci d'abaissement du centre de gravité du véhicule, les arbres d'entraînement sont classiquement placés au plus près du moteur thermique.

L'utilisation d'un tel couplage mécanique entre la machine hydraulique et les éléments entraînés par le moteur thermique limite l'abaissement du centre de gravité, notamment par l'augmentation de la distance entre les arbres d'entraînement et le moteur due à l'encombrement de la machine hydraulique.

Il est également connu de l'art antérieur de déporter la machine hydraulique par rapport à l'axe de l'essieu, en réalisant un entraînement de la machine hydraulique par une boîte de renvoi d'angle transmettant le mouvement du pignon primaire de différentiel à l'arbre de la machine hydraulique. Il est également connu, avec une architecture dans laquelle la machine hydraulique est déportée par rapport à l'axe de l'essieu, d'utiliser un pignon solidaire à l'un des arbres d'entraînement pour transmettre le mouvement à l'arbre de la machine hydraulique.

Dans le cas d'un entraînement par un des arbres d'entraînement, la vitesse d'entraînement de la machine hydraulique présentera l'inconvénient de varier, et donc de provoquer une variation de débit et/ou de pression de la machine hydraulique, à chaque fois que le véhicule va suivre une trajectoire courbe.

Dans le cas d'un entrainement par une boîte de renvoi d'angle entrainée par le pignon primaire du différentiel, la présence d'éléments mécaniques supplémentaires entre le pignon primaire de différentiel et l'arbre d'entrée de la machine hydraulique implique une dissipation d'énergie par frottements, et donc une diminution de la puissance reçue par la machine hydraulique. De plus, l'intégration d'une boîte de renvoi d'angle apporte une difficulté d'intégration et ne permet pas de s'adapter à un grand nombre de véhicules. En effet, l'ajout de composants augmente l'encombrement du dispositif d'entraînement.

### PRÉSENTATION GÉNÉRALE DE L'INVENTION

Un but de l'invention est de permettre l'entraînement d'une machine hydraulique par un élément en aval de la chaîne de transmission de puissance.

Un autre but est de contourner les problématiques d'encombrement liées au couplage d'une machine hydraulique et d'un élément mécanique en aval du moteur.

Un autre but est de permettre l'abaissement du centre de gravité du véhicule en diminuant la distance entre le bloc moteur et l'axe des arbres d'entraînement.

Un autre but est de protéger la liaison mécanique des impuretés.

Un autre but est de permettre la lubrification des éléments de couplage.

Un autre but est de limiter la perte de puissance entre la cage de différentiel et la machine hydraulique.

Un autre but est de réaliser l'entraînement de la machine hydraulique à une vitesse de rotation correspondant à la vitesse moyenne des roues.

Un autre but est de permettre une installation aisée du système sur différents types de véhicules.

Selon un aspect, l'invention propose un système d'assistance hydraulique d'un véhicule comprenant un arbre secondaire d'une boîte de vitesse du véhicule, un différentiel comportant une cage de différentiel, la cage de différentiel comportant une denture primaire, la denture primaire assurant l'entraînement en rotation de la cage de différentiel par l'arbre secondaire de la boîte de vitesse, un essieu, le différentiel assurant l'entraînement en rotation de l'essieu, une machine hydraulique qui est déportée de l'essieu, de sorte que la machine hydraulique et l'essieu sont non coaxiaux, la cage de différentiel comprenant en outre une denture supplémentaire, ladite denture supplémentaire assurant l'entrainement en rotation la machine hydraulique.

Par essieu, il est entendu un ensemble mécanique comportant deux arbres d'entraînement s'étendant chacun entre le moyeu d'une roue et une sortie du différentiel, les arbres d'entraînement transmettant une puissance mécanique de rotation entre les roues et le différentiel.

Les arbres d'entraînement s'étendent selon un axe longitudinal commun aux deux arbres, cet axe étant l'axe de l'essieu.

Par déportée, il est entendu que l'axe de la machine hydraulique et l'axe de l'essieu ne sont pas concentriques. La machine hydraulique et les arbres d'entraînement ne sont donc pas coaxiaux.

Un tel dispositif est avantageusement complété par les caractéristiques suivantes, prises seules ou en combinaison :
- la denture supplémentaire s'engrène sur un pignon d'entrée de la machine hydraulique ;
- la cage de différentiel comprend une couronne dentée, la couronne dentée comprenant une première denture formant la denture primaire, et une deuxième denture formant la denture supplémentaire, la machine hydraulique comprend un arbre d'entrée équipé à une extrémité d'un pignon d'entrée, la denture supplémentaire coopérant avec le pignon d'entrée de la machine hydraulique pour entraîner la machine hydraulique en rotation ;
- le différentiel est contenu dans un carter de différentiel qui comprend un demi-carter inférieur, le demi-carter inférieur comprenant des moyens de mise en position et de guidage en rotation de l'arbre d'entrée de la machine hydraulique ;
- le demi-carter inférieur comprend une portée de centrage et une portée de calage axial, l'arbre d'entrée de la machine hydraulique comprenant une portion de centrage et une portion de calage axial, un élément de centrage étant configuré pour mettre en position et guider en rotation la portion de centrage par rapport à la portée de centrage, un élément de calage axial étant configuré pour arrêter axialement et guider en rotation la portion de calage axial par rapport à la portée de calage axial ;
- la cage de différentiel comprend une première extrémité axiale, une deuxième extrémité axiale, et une portion centrale sur laquelle est située la denture primaire, une roue dentée étant située sur la première extrémité axiale ou la deuxième extrémité axiale de ladite cage de différentiel et formant la denture supplémentaire ;
- la denture supplémentaire est protégée par un carter intermédiaire qui est rapporté sur le carter de différentiel ;
- la denture supplémentaire entraîne le pignon d'entrée de la machine hydraulique par l'intermédiaire d'une courroie, d'une chaîne ou d'un train d'engrenages ;
- le pignon d'entrée est lié à l'arbre d'entrée de la machine hydraulique par un cardan ;

Selon un autre aspect, l'invention propose un véhicule équipé d'une machine hydraulique entraînée par un tel dispositif.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique en coupe d'un mode de réalisation de couplage mécanique conforme à l'invention ;
- la figure 2 est une représentation schématique en coupe d'un autre mode de réalisation de couplage mécanique conforme à l'invention ;
- la figure 3 est une représentation schématique en coupe d'un mode de réalisation de l'invention faisant intervenir une transmission par cardan.

### DESCRIPTION D'UN OU PLUSIEURS MODES DE MISE EN ŒUVRE ET DE RÉALISATION

Les modes de réalisation décrits ci-après concernent le cas d'un couplage mécanique réalisé entre des éléments mécaniques entraînés par le moteur d'un véhicule et une machine hydraulique,

Ces modes de réalisation sont décrits dans un but purement illustratif et non limitatif.

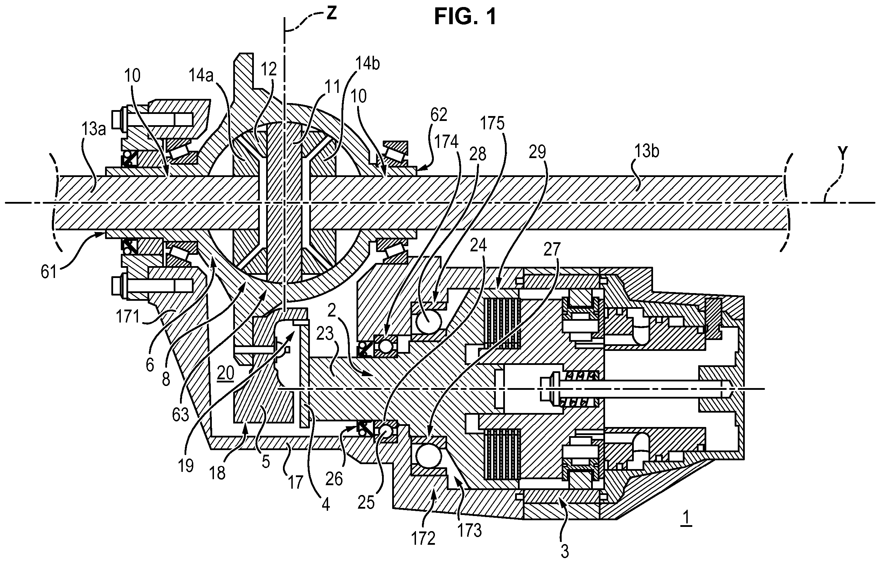

En référence à la figure 1, un dispositif d'entraînement en rotation lie une machine hydraulique 1 à une cage 6 d'un différentiel 7. Un carter 17 assure le guidage en rotation de la machine hydraulique 1 et de la cage du différentiel 6. Deux arbres d'entraînement 13a, 13b s'étendant selon un axe commun Y sont montés à rotation par rapport à la cage 6 de différentiel. L'axe de la machine hydraulique 1 est déporté de l'axe Y des arbres d'entraînement 13a, 13b formant l'essieu, de sorte que la machine hydraulique 1 et l'essieu ne sont pas coaxiaux.

La machine hydraulique 1 comporte un arbre d'entrée 2 présentant plusieurs portions de diamètres différents.

Une portion d'entrée 23 comporte les éléments d'entraînement de la machine hydraulique par le système moteur, et s'étend jusqu'à une portion de centrage 24, de diamètre supérieur.

La portion de centrage 24 est généralement en coopération avec un élément de centrage 25 et un élément d'étanchéité 26. Ici, l'élément de centrage 25 est un roulement à billes qui permet le guidage en rotation de l'arbre d'entrée 2 par rapport à un carter de la machine hydraulique 3, l'élément d'étanchéité 26 étant un joint à lèvres.

La portion de centrage 24 s'étend jusqu'à une portion de calage axial 27 présentant un diamètre plus important que celui de la portion de centrage 24.

La portion de calage axial 27 comporte un élément de calage axial 28 prenant appui sur un épaulement situé à une extrémité de la portion de calage axial et un deuxième épaulement réalisé sur le carter 3 de la machine hydraulique.

Ici, l'élément de calage axial est un roulement à billes à contact oblique.

Au-delà de l'épaulement de la portion de calage axial 27 s'étend une portion d'embrayage 29 présentant un diamètre plus important, et dont la géométrie interne définit une cavité comportant des disques d'embrayage permettant à l'arbre d'entrée d'entraîner l'arbre actif 30 de la machine hydraulique.

Le carter 3 présente des moyens d'assemblage permettant de le fixer à un élément solidaire du châssis du véhicule.

Un pignon d'entrée de la machine hydraulique 4 est assemblé à la portion d'entrée 23 de l'arbre 2 de la machine hydraulique, ce pignon d'entrée 4 étant configuré pour coopérer avec un élément d'entraînement.

Un différentiel 7 comporte classiquement une cage 6 comportant une paroi 8 délimitant une enceinte 9, la paroi 8 étant traversée de plusieurs orifices 10.

La cage 6 comporte une première extrémité axiale 61, une deuxième extrémité axiale 62 et une portion centrale 63.

Deux orifices coaxiaux 10 sont situés au niveau des première 61 et deuxième 62 extrémités axiales.

Le différentiel 7 comporte un arbre de différentiel 11 s'étendant à travers l'enceinte 9 selon un axe Z, l'arbre de différentiel 11 étant monté à rotation par rapport à la cage 6. Deux pignons de glissement 12 situés dans l'enceinte 9 sont montés sur l'arbre de différentiel 11.

Deux arbres d'entraînement 13a, 13b s'étendant tous deux selon un axe Y orthogonal à l'axe Z sont montés en regard l'un par rapport à l'autre sur le différentiel 7. Les arbres d'entraînement 13a, 13b sont montés à rotation dans la cage 6 du différentiel 7, et comportent tous deux un pignon 14a, 14b situé dans l'enceinte 9 du différentiel 7.

Les pignons 14a, 14b coopèrent tous deux avec les deux pignons de glissement 12.

La cage 6 de différentiel 7 comporte généralement sur une surface extérieure un profil coopérant avec le profil d'un arbre moteur, comme une couronne dentée 5.

Ici, l'arbre moteur est un arbre secondaire de boîte de vitesse.

L'arbre moteur entraîne en rotation la cage 6 de différentiel 7, cette rotation étant transmise aux arbres d'entraînement 13a, 13b par l'intermédiaire des pignons de glissement 12 montés sur l'arbre de différentiel 11.

Pour des raisons de lubrification et de protection, les éléments du différentiel précédemment décrit sont contenus dans un carter de différentiel 17, comportant des ouvertures permettant un montage à rotation des arbres d'entraînement 13a, 13b et de l'arbre secondaire de boîte de vitesse.

Dans un premier mode de réalisation, un entraînement mécanique est effectué entre l'arbre d'entrée 2 de la machine hydraulique et la cage 6 de différentiel.

Le pignon 4 monté sur l'arbre d'entrée 2 de la machine hydraulique coopère avec une portée d'une couronne 5 fixée à la cage 6 de différentiel.

La couronne 5 comporte une denture primaire 18 pour coopérer avec l'arbre secondaire de boîte de vitesse, et une denture supplémentaire 19 pour coopérer avec le pignon 4 d'entrée de la machine hydraulique.

Le diamètre de la denture primaire 18 peut être identique à celui de la denture supplémentaire 19, ou bien supérieur ou inférieur, en fonction du rapport de transmission recherché entre les vitesses de rotation de la machine hydraulique 1 et de la cage 6 de différentiel.

Les dentures primaire 18 et secondaire 19 peuvent être droites ou à chevrons, à profil droit.

Dans l'exemple illustré la denture supplémentaire 19 présente un diamètre inférieur à la denture primaire 18, et le contact avec le pignon 4 d'entrée de la machine hydraulique est extérieur. Dans une variante il est possible de réaliser une couronne 5 coopérant avec le pignon 4 d'entrée de la machine hydraulique avec un contact intérieur.

Le carter de différentiel 17 comporte deux portées cylindriques recevant des guidages en rotation de la cage 6 de différentiel dans le carter 17.

Ici, les éléments de guidage en rotation sont des roulements à rouleaux coniques.

Le carter 17 comporte une cavité 20 contenant les éléments de transmission tels que la couronne 5 et le pignon 4 d'entrée de la machine hydraulique.

Le carter 17 comporte également sur un demi-carter inférieur 171 une géométrie adaptée pour recevoir les éléments de la machine hydraulique 1.

Le demi-carter 171 présente un effet une excroissance 172 délimitant une cavité de guidage 173 globalement cylindrique, s'étendant selon un axe parallèle à l'axe des arbres d'entraînement 13.

La cavité de guidage 173 communique avec la cavité 20, et comporte une portée de centrage 174 coopérant avec l'élément de centrage 25 mettant en position radiale la portion de centrage 24 de l'arbre d'entrée 2 de la machine hydraulique dans la cavité de guidage 173.

L'élément d'étanchéité 26 est situé dans la portée de centrage 174, isolant ainsi la cavité de guidage 173 et la cavité 20.

La portée de centrage 174 s'étend jusqu'à un épaulement la séparant d'une portée de calage axial 175 coopérant avec l'élément de calage axial 28 prenant appui sur la portion de calage axial 27 de l'arbre d'entrée 2 de la machine hydraulique.

Le carter 17 du différentiel étant asymétrique, il permet d'assembler la machine hydraulique 1 au différentiel 7 tout en excentrant l'axe de rotation Y de la machine hydraulique 1 par rapport à l'axe X des arbres d'entraînement 13a, 13b.

Il permet en outre, en contenant tous les organes de transmission de mouvement de la cage 6 de différentiel à la machine hydraulique 1, d'assurer la lubrification et la protection face aux impuretés des éléments mécaniques, en réalisant une étanchéité aux interfaces d'assemblage.

L'axe de la machine hydraulique étant déporté de l'axe de l'essieu, l'encombrement lié à la géométrie de la machine hydraulique 1 ne représente plus un problème pour la position relative des arbres d'entraînement 13a, 13b et du moteur.

Le couplage mécanique de la couronne 5 de la cage 6 de différentiel et du pignon d'entrée 4 de la machine hydraulique permet en outre de dimensionner le rapport de transmission pour adapter la vitesse de rotation de la machine hydraulique 1, permettant ainsi de réduire la cylindrée, et donc la taille, de la machine hydraulique 1 en maximisant sa vitesse de rotation. C'est-à-dire que la vitesse de rotation de la machine hydraulique 1 peut être supérieure à la vitesse de rotation de la cage de différentiel 6.

L'implémentation de la machine hydraulique 1 et du système d'entraînement sur un véhicule est simplifiée grâce à l'entraînement de la machine hydraulique 1 par la cage 6 de différentiel et le déport de la machine hydraulique des arbres d'entraînement 13.

En effet, le demi-carter inférieur de différentiel étant classiquement situé sous le bloc motopropulseur et étant disposé de manière à offrir un accès aisé, il suffirait de changer le demi-carter inférieur du véhicule pour installer le demi-carter inférieur 171 configuré pour recevoir la machine hydraulique 1.

Il est également envisageable dans une variante que le carter de différentiel 17 ne comporte pas de demi-carter inférieur 171 et soit réalisé de manière différente, auquel cas un de ses éléments constitutifs comporterait des éléments de guidage en rotation de l'arbre d'entrée 4 de la machine hydraulique.

Dans une variante de ce mode de réalisation, la couronne 5 présente une portée conique, qui interagit avec un pignon conique d'entrée 4 de la machine hydraulique. L'axe de la machine hydraulique est perpendiculaire à l'axe Y des arbres d'entraînement 13a, 13b.

La machine hydraulique 1 peut être située sous le différentiel 7, de manière à abaisser le centre de gravité, ou au niveau du différentiel 7, en fonction de la facilité d'intégration au véhicule.

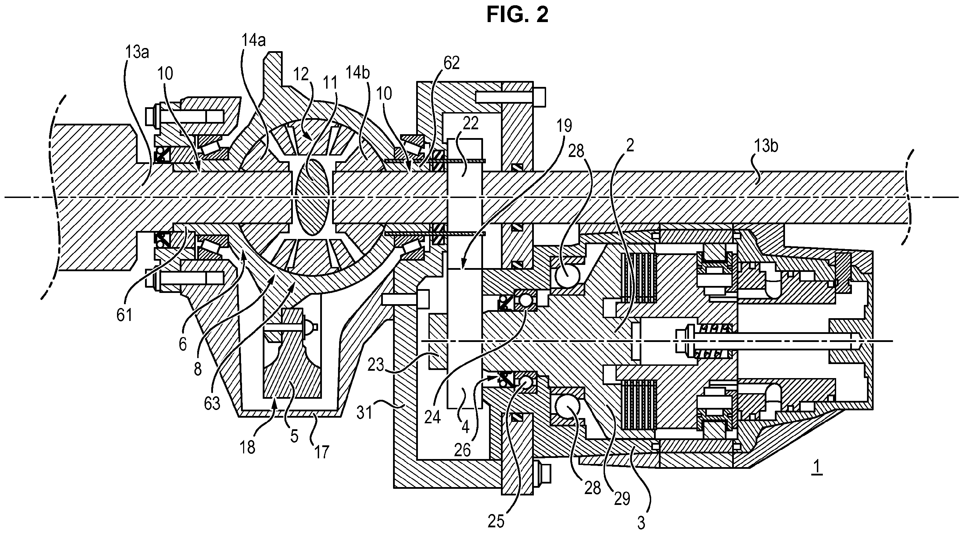

Dans un deuxième mode de réalisation représenté figure 2, la cage 6 de différentiel comporte une cavité 9 délimitée par une paroi 8 percée d'orifices 10 coaxiaux deux à deux, dans lesquels sont montés à rotation par rapport à la cage 6 de différentiel une pluralité d'arbres, parmi eux l'arbre de différentiel 11 et deux arbres d'entraînement 13a, 13b.

L'arbre de différentiel 11 comporte dans la cavité deux pignons de glissement 12 coopérant avec deux pignons coniques 14a, 14b solidaires des arbres d'entraînement 13a, 13b.

La cage 6 de différentiel est montée à rotation par rapport au carter 17 de différentiel. Ici, ce montage à rotation est assuré par des roulements à rouleaux coniques disposés de part et d'autre de la cage 6 de différentiel.

La cage 6 de différentiel comporte une couronne dentée 5 comportant une denture primaire 18, assurant l'entraînement en rotation de la cage 6 par l'arbre secondaire de la boîte de vitesses.

La cage 6 de différentiel comporte en outre une denture supplémentaire 19 transmettant le mouvement de rotation de la cage 6 de différentiel à la machine hydraulique 1.

La cage 6 comporte une première 61 et une deuxième 62 extrémités axiales et une portion centrale 63.

Dans ce mode de réalisation, une roue dentée 22 comporte la denture supplémentaire 19.

La roue dentée 22 s'étend depuis une des extrémités axiales 61, 62 coaxialement à un des arbres d'entraînement 13a, 13b.

La roue dentée 22 est disposée au-delà des portées de roulements assurant le guidage de la cage 6 par rapport au carter 17 de différentiel, et entraîne directement un pignon d'entrée 4 implanté sur un arbre d'entrée 2 de la machine hydraulique 1.

L'arbre d'entrée 2 s'étend dans un carter 3 et entraîne les organes permettant de transformer le mouvement et convertir l'énergie.

L'arbre d'entrée 2 comporte une portion de centrage 24 coopérant avec un élément de centrage 25 le mettant en position dans une portée de centrage 174 réalisée dans le carter 3 de la machine hydraulique, de manière à réaliser une mise en position radiale de l'arbre 2 de la machine hydraulique par rapport au carter 3.

La portion de centrage 24 s'étend entre une portion d'entrée 23 sur laquelle est assemblée le pignon d'entrée 4, et une portion de calage axial 27 s'étendant au sein d'une portée de calage axial 175 réalisée dans le carter 3.

L'arbre 2 de la machine hydraulique est mis en position axialement par l'intermédiaire d'un élément de mise en position axiale 28, ici un roulement à contact oblique.

La machine hydraulique 1 s'étend selon un axe parallèle à l'axe Y des cardans 13a, 13b. Le carter 3 de la machine hydraulique est fixé à un élément du châssis du véhicule.

Un carter intermédiaire 31 protège le mécanisme d'entraînement de la machine hydraulique 1 par la cage de différentiel 6.

Le carter intermédiaire 31 est fixé sur le carter 3 de la machine hydraulique et sur le carter 17 de différentiel.

De cette manière, le carter intermédiaire 31 ne comporte pas d'éléments de guidage en rotation, cette fonction étant réalisée par le carter 3 de la machine hydraulique et le carter 17 du différentiel.

Une variante non représentée de ce mode de réalisation utilise une courroie ou une chaîne pour transmettre le mouvement de la cage 6 du différentiel à l'arbre d'entrée 4 de la machine hydraulique.

Cette variante offre l'avantage de pouvoir réduire la taille de la roue dentée 22 et du pignon d'entrée 4, diminuant de ce fait l'inertie du dispositif, tout en offrant la possibilité d'augmenter la distance entre l'axe de la machine hydraulique 1 et l'axe Y des arbres d'entraînement 13a, 13b.

Dans une autre variante non représentée, l'entraînement de l'arbre d'entrée 4 par la cage de différentiel 6 est réalisé par un train d'engrenages, permettant d'augmenter la distance entre l'axe Y des arbres d'entraînement 13 et l'axe de la machine hydraulique 1.

Dans une autre variante de ce mode de réalisation, la roue dentée 22 comporte une portée conique, coopérant avec un pignon conique d'entrée 4 de la machine hydraulique. L'axe de la machine hydraulique 1 est perpendiculaire à l'axe Y des arbres d'entraînement 13a, 13b.

La roue dentée 22 peut également coopérer avec un pignon présentant une portée droite et une portée conique, la portée conique du pignon coopérant avec le pignon conique d'entrée 4 de la machine hydraulique. Cette variante permet d'écarter davantage la machine hydraulique 1 du différentiel 7.

Dans le cas de pignons, le carter intermédiaire 31 est à bain d'huile, assurant ainsi la lubrification des pignons. Dans le cas de la courroie, le carter intermédiaire 31 est sec.

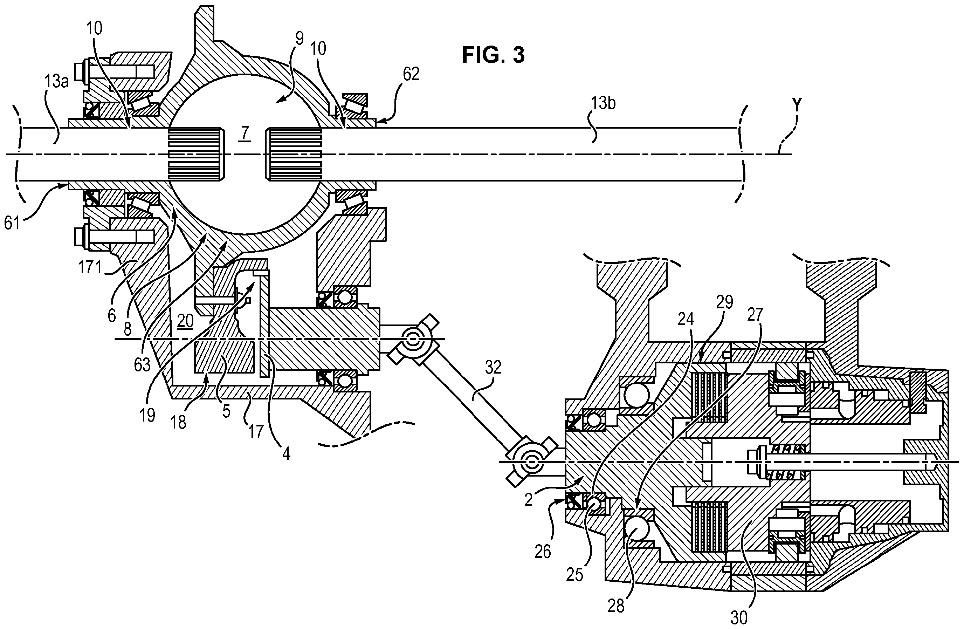

En référence à la figure 3, dans un mode de réalisation, le pignon d'entrée 4 peut être lié à l'arbre d'entrée 2 au moyen d'un cardan 32 permettant de pallier aux désalignements éventuels entre l'arbre d'entrée 2 et la cage 6 de différentiel, dus à des contraintes d'implémentation. Egalement ce montage permet de pallier aux désalignements causés par le fonctionnement du véhicule, dans le cas où la machine hydraulique 1 n'est pas liée rigidement au groupe motopropulseur.

Par exemple lorsque la machine hydraulique 1 est fixée au châssis du véhicule tandis que le pignon d'entrée 4 est fixé au groupe motopropulseur, qui est assemblé au châssis par une suspension souple (par exemple un silentbloc). Le groupe motopropulseur est donc susceptible de se déplacer par rapport au châssis, provoquant de ce fait un déplacement du pignon d'entrée 4 par rapport à la machine hydraulique 1.

On entend par cardan toute transmission de rotation permettant un désaxage entre l'axe de rotation du pignon d'entrée 4 et l'axe de rotation de l'arbre d'entrée 2, éventuellement un angle entre l'axe de rotation du pignon d'entrée 4 et l'axe de rotation de l'arbre d'entrée 2, et éventuellement un écartement de la machine 1 et du pignon d'entrée 4. Un tel joint de cardan, ou arbre à joints de cardan peut être réalisé de différentes manières, par exemple par joints a billes tripodes, par joints à croisillon, par joints à glissière, par joints à disque déformable, etc. un tel joint de cardan est préférablement homocinétique.

Dans ce mode de réalisation, le carter de différentiel 17 présente une ouverture permettant de guider en rotation le pignon d'entrée 4, par exemple apte à recevoir un montage formant palier de rotation et étanchéité.

La machine hydraulique 1 est guidée en rotation par rapport à un carter de pompe 3.

Dans ce mode de réalisation, le carte 3 de la machine hydraulique peut être fixé sur le châssis du véhicule ou encore sur un élément solidaire du bloc moteur, afin de solidariser la machine hydraulique, le bloc moteur et les éléments de transmission.

La liaison par cardan présente l'avantage de ne pas nécessiter de protection par carter, ainsi que de permettre une transmission de puissance même en cas de mouvement relatif entre la machine hydraulique et les éléments de transmission si la machine hydraulique n'est pas solidaire du bloc moteur. Il est cependant possible de prévoir une solution utilisant un carter intermédiaire 31.

L'invention permet donc d'entrainer une machine hydraulique 1 par la cage 6 d'un différentiel, tout en ayant une grande latitude de placement de la machine par rapport à l'axe d'un cardan 13 de la transmission, et également d'utiliser une machine de plus gros diamètre, et donc de type varié.

L'invention peut s'appliquer à arbre secondaire de boite de vitesse proche d'un moteur thermique, mais aussi à toute sortie de différentiel, de manière à écarter l'axe de la machine hydraulique de l'axe d'une sortie de différentiel.

## Revendications

1. Système d'assistance hydraulique d'un véhicule comprenant :
- un arbre secondaire d'une boîte de vitesse du véhicule,
- un différentiel (7) comportant une cage (6) de différentiel, la cage (6) de différentiel comportant une denture primaire (18), la denture primaire (18) assurant l'entraînement en rotation de la cage (6) de différentiel par l'arbre de sortie de la boîte de vitesse,
- un essieu, le différentiel (7) assurant l'entraînement en rotation de l'essieu, et
- une machine hydraulique (1),
**caractérisé en ce que** la machine hydraulique est déportée de l'essieu, de sorte que la machine hydraulique (1) et l'essieu sont non coaxiaux, la cage (6) de différentiel comprenant en outre une denture supplémentaire (19), la denture supplémentaire assurant l'entrainement en rotation de la machine hydraulique (1).

2. Système d'assistance hydraulique selon la revendication 1, dans lequel la denture supplémentaire (19) s'engrène sur un pignon d'entrée (4) de la machine hydraulique (1).

3. Système d'assistance hydraulique selon la revendication 1 ou 2, dans lequel la cage (6) de différentiel comprend une couronne dentée (5), la couronne dentée (5) comprenant une première denture formant la denture primaire (18), et une deuxième denture formant la denture supplémentaire (19), et en ce que la machine hydraulique (1) comprend un arbre d'entrée (2) équipé à une extrémité d'un pignon d'entrée (4), la denture supplémentaire (19) coopérant avec le pignon d'entrée (4) de la machine hydraulique (1) pour entraîner la machine hydraulique (1) en rotation.

4. Système d'assistance hydraulique selon l'une des revendications précédentes, dans lequel le différentiel (7) est contenu dans un carter (17) de différentiel qui comprend un demi-carter inférieur (171), le demi-carter inférieur (171) comprenant des moyens de mise en position et de guidage en rotation de l'arbre d'entrée (2) de la machine hydraulique.

5. Système d'assistance hydraulique selon la revendication 4, dans lequel le demi-carter inférieur (171) comprend une portée de centrage (174) et une portée de calage axial (175), l'arbre d'entrée (2) de la machine hydraulique comprenant une portion de centrage (24) et une portion de calage axial (27), un élément de centrage (25) étant configuré pour mettre en position et guider en rotation la portion de centrage (24) par rapport à la portée de centrage (174), un élément de calage axial (28) étant configuré pour arrêter axialement et guider en rotation la portion de calage axial (27) par rapport à la portée de calage axial (175).

6. Système d'assistance hydraulique selon la revendication 1, dans lequel la cage (6) de différentiel comprend une première extrémité axiale (61), une deuxième extrémité axiale (62), et une portion centrale (63) sur laquelle est située la denture primaire (18), une roue dentée (22) étant située sur la première extrémité axiale (61) ou la deuxième extrémité axiale (62) de ladite cage (6) de différentiel et formant la denture supplémentaire (19).

7. Système d'assistance hydraulique selon la revendication 6, dans lequel la denture supplémentaire (19) est protégée par un carter intermédiaire (31) qui est rapporté sur le carter (17) de différentiel.

8. Système d'assistance hydraulique selon l'une des revendications 6 ou 7, dans lequel la denture supplémentaire (19) entraîne le pignon d'entrée (4) de la machine hydraulique par l'intermédiaire d'une courroie, d'une chaine ou d'un train d'engrenages.

9. Système d'assistance hydraulique selon l'une des revendications précédentes, dans lequel le pignon d'entrée (4) est lié à l'arbre d'entrée (2) de la machine hydraulique (1) par un cardan (32).

10. Véhicule comprenant un système d'assistance hydraulique selon l'une quelconque des revendications 1 à 9.

## Patentansprüche

1. Hydraulisches Assistenzsystem für ein Fahrzeug, Folgendes umfassend:
- eine Sekundärwelle eines Getriebes des Fahrzeugs,
- ein Differential (7), das einen Differentialkäfig (6) beinhaltet, wobei der Differentialkäfig (6) eine Primärverzahnung (18) beinhaltet, wobei die Primärverzahnung (18) für den Drehantrieb des Differentialkäfigs (6) durch die Ausgangswelle des Getriebes sorgt,
- eine Achse, wobei das Differential (7) für den Drehantrieb der Achse sorgt, und
- eine hydraulische Maschine (1),
**dadurch gekennzeichnet, dass** die hydraulische Maschine von der Achse versetzt ist, sodass die hydraulische Maschine (1) und die Achse nicht koaxial sind, wobei der Differentialkäfig (6) weiter eine zusätzliche Verzahnung (19) umfasst, wobei die zusätzliche Verzahnung für den Drehantrieb der hydraulischen Maschine (1) sorgt.

2. Hydraulisches Assistenzsystem nach Anspruch 1, wobei die zusätzliche Verzahnung (19) in ein Eingangsritzel (4) der hydraulischen Maschine (1) eingreift.

3. Hydraulisches Assistenzsystem nach Anspruch 1 oder 2, wobei der Differentialkäfig (6) einen Zahnkranz (5) umfasst, wobei der Zahnkranz (5) eine erste Verzahnung umfasst, die die Primärverzahnung (18) bildet, und eine zweite Verzahnung, die die zusätzliche Verzahnung (19) bildet, und dadurch dass die hydraulische Maschine (1) eine Eingangswelle (2) umfasst, die an einem Ende mit einem Eingangsritzel (4) ausgestattet ist, wobei die zusätzliche Verzahnung (19) mit dem Eingangsritzel (4) der hydraulischen Maschine (1) zusammenwirkt, um die hydraulische Maschine (1) in Drehung anzutreiben.

4. Hydraulisches Assistenzsystem nach einem der vorstehenden Ansprüche, wobei das Differential (7) in einem Differentialgehäuse (17) enthalten ist, das ein unteres Halbgehäuse (171) umfasst, wobei das untere Halbgehäuse (171) Positionierungs― und Drehführungsmittel der Eingangswelle (2) der hydraulischen Maschine umfasst.

5. Hydraulisches Assistenzsystem nach Anspruch 4, wobei das untere Halbgehäuse (171) eine Zentrieranlagefläche (174) und eine axiale Verkeilungsanlagefläche (175) umfasst, wobei die Eingangswelle (2) der hydraulischen Maschine einen Zentrierabschnitt (24) und einen axialen Verkeilungsabschnitt (27) umfasst, wobei ein Zentrierelement (25) konfiguriert ist, um den Zentrierabschnitt (24) in Bezug auf die Zentrieranlagefläche (174) zu positionieren und drehzuführen, wobei ein axiales Verkeilungselement (28) konfiguriert ist, um den axialen Verkeilungsabschnitt (27) in Bezug auf die axiale Verkeilungsanlagefläche (175) axial zu stoppen und drehzuführen.

6. Hydraulisches Assistenzsystem nach Anspruch 1, wobei der Differentialkäfig (6) ein erstes axiales Ende (61), ein zweites axiales Ende (62) und einen zentralen Abschnitt (63) umfasst, auf dem sich die Primärverzahnung (18) befindet, wobei sich ein Zahnrad (22) an dem ersten axialen Ende (61) oder dem zweiten axialen Ende (62) des Differentialkäfigs (6) befindet und die zusätzliche Verzahnung (19) bildet.

7. Hydraulisches Assistenzsystem nach Anspruch 6, wobei die zusätzliche Verzahnung (19) durch ein Zwischengehäuse (31) geschützt ist, das an dem Differentialgehäuse (17) beigebracht ist.

8. Hydraulisches Assistenzsystem nach einem der Ansprüche 6 oder 7, wobei die zusätzliche Verzahnung (19) das Eingangsritzel (4) der hydraulischen Maschine anhand eines Riemens, einer Kette oder einer Zahnkette antreibt.

9. Hydraulisches Assistenzsystem nach einem der vorstehenden Ansprüche, wobei das Eingangsritzel (4) über eine kardanische Lagerung (32) mit der Eingangswelle (2) der hydraulischen Maschine (1) verbunden ist.

10. Fahrzeug, das ein hydraulisches Assistenzsystem nach einem der Ansprüche 1 bis 9 umfasst.

## Claims

1. A hydraulic assist system of a vehicle comprising:
- a secondary shaft of a gearbox of the vehicle,
- a differential (7) including a differential cage (6), the differential cage (6) including a primary toothing (18), the primary toothing (18) ensuring the rotational drive of the differential cage (6) by the output shaft of the gearbox,
- an axle, the differential (7) ensuring the rotational drive of the axle, and
- a hydraulic machine (1),
**characterised in that** the hydraulic machine is offset from the axle, such that the hydraulic machine (1) and the axle are non-coaxial, the differential cage (6) further comprising an additional toothing (19), the additional toothing ensuring the rotational drive of the hydraulic machine (1).

2. The hydraulic assist system according to claim 1, wherein the additional toothing (19) meshes on an input pinion (4) of the hydraulic machine (1).

3. The hydraulic assist system according to claim 1 or 2, wherein the differential cage (6) comprises a crown gear (5), the crown gear (5) comprising a first toothing forming the primary toothing (18), and a second toothing forming the additional toothing (19), and in that the hydraulic machine (1) comprises an input shaft (2) equipped at one end with an input pinion (4), the additional toothing (19) cooperating with the input pinion (4) of the hydraulic machine (1) to drive the hydraulic machine (1) in rotation.

4. The hydraulic assist system according to one of the preceding claims, wherein the differential (7) is contained within a differential casing (17) which comprises a lower half casing (171), the lower half casing (171) comprising means for positioning and guiding in rotation the input shaft (2) of the hydraulic machine.

5. The hydraulic assist system according to claim 4, wherein the lower half casing (171) comprises a centring surface (174) and an axial wedging surface (175), the input shaft (2) of the hydraulic machine comprising a centring portion (24) and an axial wedging portion (27), a centring element (25) being configured to position and guide in rotation the centring portion (24) relative to the centring surface (174), an axial wedging element (28) being configured to axially stop and guide in rotation the axial wedging portion (27) relative to the axial wedging surface (175).

6. The hydraulic assist system according to claim 1, wherein the differential cage (6) comprises a first axial end (61), a second axial end (62), and a central portion (63) on which the primary toothing (18) is located, a gear wheel (22) being located on the first axial end (61) or the second axial end (62) of said differential cage (6) and forming the additional toothing (19).

7. The hydraulic assist system according to claim 6, wherein the additional toothing (19) is protected by an intermediate casing (31) which is attached on the differential casing (17).

8. The hydraulic assist system according to one of claims 6 or 7, wherein the additional toothing (19) drives the input pinion (4) of the hydraulic machine via a belt, a chain or a gear train.

9. The hydraulic assist system according to one of the preceding claims, wherein the input pinion (4) is linked to the input shat (2) of the hydraulic machine (1) through a universal joint (32).

10. A vehicle comprising a hydraulic assist system according to any one of claims 1 to 9.
